Europäisches Patentamt

European Patent Office

Office européen des brevets

(11) Publication number: **0 074 465**
A1

(12) # EUROPEAN PATENT APPLICATION

(21) Application number: **82105075.4**

(22) Date of filing: 09.06.82

(51) Int. Ci.³: **G 01 C 19/64**

(30) Priority: 14.09.81 US 301902

(43) Date of publication of application:
23.03.83 Bulletin 83/12

(84) Designated Contracting States:
DE FR GB

(71) Applicant: Rockwell International Corporation
2230 East Imperial Highway
El Segundo, California 90245(US)

(72) Inventor: Pondrom, Walter Lewis
733 Toussau Drive
Fullerton California 92631(US)

(74) Representative: Wagner, Karl H.
P.O. Box 246 Gewürzmühlstrasse 5
D-8000 Munich 22(DE)

(54) **Magneto-optic fiber sagnac interferometer gyro.**

(57) An interferometer gyroscope includes a multiturn optical fiber together with apparatus for producing therefrom a light beam containing a sagnac phase shift relatable to the rate of rotation of the coil about an axis of rotational sensitivity. An electrical coil is provided adjacent the optical fiber to generate a magnetic field parallel to the optical fiber to induce a Faraday effect into the optical fiber. A servo apparatus responsive to the sagnac phase shift is provided to adjust the current in the electrical coil. The servo is operative to null the sagnac phase shift in the optical fiber by balancing the Faraday effect and the sagnac effect in the optical fiber, whereby the current in the coil is proportional to the rate of rotation of the waveguide when the sagnac phase shift is nulled.

EP 0 074 465 A1

# MAGNETO-OPTIC FIBER SAGNAC INTERFEROMETER GYRO

## Background of the Invention

**1. Field of the Invention:**

This invention relates to improvements in interferometer gyroscopes, and, more particularly, to improvements in Sagnac interferometer gyroscopes of the type in which a Sagnac phase shift relatable to the rate of angular rotation of the gyroscope occurs in counter rotating light beams in an optical waveguide.

**2. Description of the Prior Art:**

The use of the Sagnac effect in fiber interferometers as a means of measuring angular rotation with respect to inertial space has been taught in a number of embodiments. These vary in relative complexity depending upon the various mechanical, optical, and electronic means employed in these embodiments.

Typical interferometer gyroscopes may be of the type described and illustrated in United States patent 4,208,128, assigned to the assignee hereof. In patent 4,208,128, a length of coiled optical fiber is provided in which counterrotating light beams are passed, each modulated with a respective frequency. When the gyroscope is rotated about an axis of rotational sensitivity, the counterrotating light beams traverse the coiled optical fiber at respective faster and slower relative speeds, producing an apparent phase shift between the two counterrotating beams relatable to the rate of rotation of the gyroscope. In the referenced patent, the two counterrotating beams are recombined and compared with a reference beam for phase detection and further use.

It has been recognized additionally in ring laser gyroscopes that the Faraday effect interaction between a magnetic field induced into the light path of the ring of the gyroscope produces a frequency bias without the necessity for rotating the ring or inserting active components in the light propagation path to achieve a non-reciprocal phase shift between light waves passing in opposite senses. Such Faraday effect operation in a ring laser gyro is illustrated in United States patent 3,649,931.

The non-reciprocal propagation frequency in a multiturn Sagnac interferometer is discussed in an article by J. L. Davis and S. Ezekiel entitled "Techniques For Shot Noise Limited Inertial Rotation Measurement Using a Multiturn Fiber Sagnac Interferometer", SPIE, Volume 157, Laser Inertial Rotation Sensors (1978) at 131 et seq.

## SUMMARY OF THE INVENTION

In view of the above, it is an object of this invention to provide an improved interferometer gyroscope.

It is another object of the invention to provide an interferometer gyroscope which produces an analog current output proportional to the input angular velocity.

It is a further object of this invention to provide an interferometer gyroscope of the type described which produces a digital output, one pulse per unit of angle, by converting the aforementioned analog current output into a frequency output.

Another object of this invention is the reduction of the random noise in the output of the gyro to a minimum value, subject to constraints of geometric size and power levels.

These and other objects, features and advantages will become apparent to those skilled in the art from the following detailed description when read in conjunction with the accompanying drawings in appended claims.

In its broad aspect, the invention presents an interferometer gyroscope utilizing means including an optical waveguide for producing a light beam containing a Sagnac phase shift relatable to the rate of rotation of the optical waveguide.
An electrical coil is located adjacent the waveguide to generate a magnetic field parallel to the waveguide to induce a Faraday effect into the waveguide. Servo means also is provided responsive to the Sagnac phase shift to adjust the current in the electrical coil. The servo means is operative to null the Sagnac phase shift in the interferometer by balancing the Faraday effect and the Sagnac effect in the waveguide, whereby the current to the coil is proportional to the rate of rotation of the waveguide when the Sagnac phase shift is nulled.

## BRIEF DESCRIPTION OF THE DRAWING

The invention is illustrated in the accompanying drawing in which:
Figure 1 is a schematic diagram of an interferometer gyroscope fabricated in accordance with the principles of the present invention.
And Figure 2 is a perspective view, partially cut away, of a magneto-optic structure which can be used in the fabrication of the interferometer gyroscope of Figure 1.

## DETAILED DESCRIPTION OF THE PREFERRED EMBODIMENTS

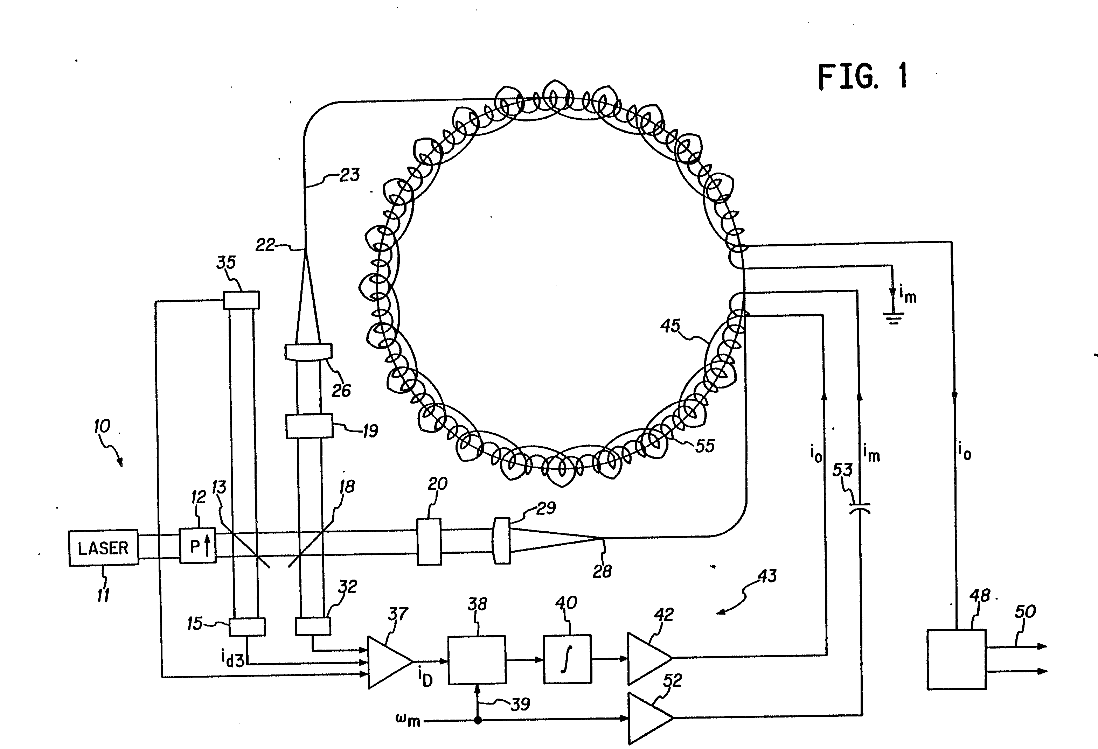

With reference now to Figure 1, an interferometer gyroscope 10 is presented, including a source 11 of substantially monochromatic, linearly polarized, electromagnetic radiation. The source 11 may be a true laser or simply a source of optical or near optical electromagnetic radiation emitting in a suitably narrow band of frequencies. This radiation source is at least approximately collimated, and is passed through a linear polarizer 12, which passes only radiation polarized with its electric vector in the plane of the diagram. (In some true lasers this polarizing means may be a part of the laser.)

The polarized radiation is then passed through a first beam-splitter means, 13, which sends a small part of the radiation to a photo-detector, 15, the functions of which will be described later. The bulk of the radiation, passing the beam splitter 13 is passed to a second beam splitter 18 which divides the radiation power into two equal parts and directs them toward two quarter-wave plates 19 and 20 respectively. The radiation reaching the quarter-wave-plate 19 is converted to a right hand circular polarized radiation which is then concentrated on the end 22 of an optical fiber 23, by a lens means or combination of lenses 26. This radiation then travels along the optical fiber waveguide coil 23 and circulates around same in a clockwise direction, and will hereafter be referred to as the clockwise beam.

Similarly, the radiation reaching quarter-wave-plate means 20 from the beam splitter 18 is converted to right-hand circular polarized radiation and is concentrated on the end 28 of the optical fiber means 23 by a lens means or combination of lenses 29. This radiation then travels along the optical fiber waveguide coil 23 and circulates around same in a counterclockwise direction, and will hereafter be referred to as the counterclockwise beam.

The clockwise beam exits the fiber optic means at end 28, and its power is collected by the lens 29 which relays it to the quarter-wave-plate means 20, which, in turn, converts its right hand circular state of polarization to linear polarization with the electric vector in the plane of the diagram. This radiation then reenters the beam splitter 18 where its power is divided into two equal parts. One part is directed back toward the laser 11 and beam splitter means 13, and the second part is directed toward a photo-detector 32.

Similarly, the counterclockwise beam exits the fiber optic 23 at end 22 and its power is collected by the lens 26, which relays it to the quarter-wave-plate 19, which converts its righthand circular polarization to linear polarization with the electric vector in the plane of the figure. This radiation then reenters the beamsplitter 18 which divides its power into two equal parts. One part is directed back toward the laser 11 and beam-splitter means 13, and the second part is directed toward the photo-detector 32.

The radiation from the clockwise and counterclockwise beams are collinear as they fall on the photo-detector 32, where they interfere and cause fringes. The photo-detector 32 may be equipped with a suitable spatial filter(not shown) to enhance its ability to detect changes in fringe location or intensity, as the phase shift between the two beams is altered by the modulating means to be described below. With appropriate design of the beamsplitter 18, which should equally transmit and reflect approximately 50 percent of the radiant energy falling on it, there will be an initial phase shift of $\pi$ radians, due to the fact that the clockwise beam has been reflected twice, while the counterclockwise beam has been transmitted twice in addition to any non-reciprocal phase shift derived from Sagnac or magneto-optic effects. The shape and format of these fringes is determined by certain geometric adjustment considerations. For the present purpose they may be presumed to be circular as in Newton's rings or as produced by a Fabry-Perot interferometer.

The current produced by the photo-detector 32 is typically of the form:

$$i_{d2} = k_{d2} \left\{ P_{cw2} + P_{cc2} - 2 \; (P_{cw2}P_{cc2})^{1/2} \cos \phi \right\} \tag{1}$$

where $i_{d2}$ - detector current

$k_{d2}$ = is a constant peculiar to the detector and its spatial filter

$P_{cw2}$ = power in the clockwise beam falling on the detector

$P_{cc2}$ = power in the counterclockwise beam falling on the detector

$\phi$ = phase shift derived from Sagnac and magneto-optics effects.

The phase shift, $\phi$, arises from three sources:

$$\phi = \phi_S - \phi_{mo} - \phi_m \tag{2}$$

where $\phi_S$ is the phase shift due to the Sagnac effect, $\phi_{mo}$, is the phase shift due to the magneto - optic effect and $\phi_m$ is the dither phase shift used in the modulation process associated with the feed-back loop which electronically balances $\phi_{mo}$ to balance $\phi_S$ within the operating frequency bandwidth of the gyroscope of this invention. $\phi_m$ is also magneto-optically derived.

The radiation from the clockwise and counterclockwise beams that falls on beamsplitter 13 is essentially 50 percent reflected onto photo-detector 35, while the other approximately 50 percent is transmitted back toward the laser 11 where it serves no useful purpose. The radiation which does fall on photo-detector 35 forms another set of interference fringes which are complementary to the set falling on photo-detector 32. The phase shift between the two beams falling on photo-detector 32 is just $\phi$ since the two interfering beams have identically the same number of reflections as well as the same number of transmissions between their separation at beamsplitter 18 and their recombination.

The current produced by the photodector 35 is typically of the form:

$$i_{d1} = k_{d1} \left\{ P_{cw1} + P_{cc1} + 2 \; (P_{cw1} \, P_{cc1})^{\frac{1}{2}} \cos \phi \right\} \tag{3}$$

where $i_{d1}$ = detector current

$k_{d1}$ = is a constant peculiar to the detector and its spatial filter

$P_{cw1}$ = power from the clockwise beam falling on the detector

$P_{cc1}$ = power from the counterclockwise beam falling on the detector.

A third signal feeding into amplifier 37 is $i_{d3}$ which is a sample of the incident power of the laser 11 which may be used to make the d.c. portion of the output current of amplifier 37 independent of fluctuations in laser power output or of the electromagnetic radiation source.

One end of the coil 45 is connected to a current-to-frequency converter 48 of the type which can generate a frequency signal indicative of both the angular rate of rotation and the sense, or direction, of the rotation. One such current-to-frequency converter is taught in U. S. Patent 4,112,428 to A. K. Dorsman, assigned to the assignee hereof, and incorporated herein by reference. The output of the amplifier 37 is thus connected to a phase sensitive demodulator 38 together with a signal 39, below described. The output of the phase sensitive demodulator 38 is directed to an integrator 40 which produces an electrical output amplified by an amplifier 42 and connected to an electrical coil 45 encircling the optical fiber coil 23. The coil 45 is connected at its other end to a current-to-frequency converter 48 to produce a pulse output 50 representative of the current $i_o$ within the coil 45 which, as will be described below, is relatable to the angular rate of rotation of the gyroscope. In addition, an amplifier 52 receives the signal 39 and applies it via a capacitor 53 to a coil 55, also encircling the optical fiber coil 23.

The Sagnac effect is a relativistic phenomenon in which the time of propagation around a closed circuit is different in clockwise and counterclockwise directions. This time difference, $\Delta t_s$ is described by:

$$\Delta t_s = \frac{4 \ \vec{A} \cdot \vec{\Lambda}}{C_o^2}$$

where $C_o$ is the velocity of light in a vacuum, $\vec{\Lambda}$ is the vector angular velocity of the coordinate system attached to the apparatus with respect to inertial space and $\vec{A}$ is the vector area swept out by the complete closed path going in one direction (i.e., clockwise). This effect is sometimes loosely described as coordinate frame dragging. It is universal in character and is not restricted to electromagnetic radiation. The same numerical value would be obtained for any means of propagation; the value of the Sagnac time difference is not dependent upon the medium or propagation means (mechanical, electrical or whatever). The velocity of light in vacuum enters into this equation as a geometro-gravitational constant from the theory of relativity and does not refer to the actual velocity of propagation. The Sagnac time difference is entirely a property of the rotating coordinate system.

If the medium of propagation is reciprocal/(i.e., like states of polarization are propagated in exactly opposite directions with equal speed) and the medium is at rest relative to the beamsplitter 18, no further difference in propagation time in the two directions around the fiber would occur. If the fiber were in motion relative to the beamsplitter 18, a correction for the classical Fresnel-Fisseau drag effect would be required. However, in this embodiment, there is no relative motion between the beamsplitter 18 and the fiber 23. In this embodiment, in addition, the fiber 23 is intentionally made non reciprocal by applying a magnetic field as will be described below.

In order to get the Sagnac phase difference $\phi_s$ from $\Delta t_s$ we find:

$$\phi_s = 2\pi\nu \ (\Delta t_s) = \frac{8\pi\vec{A}\cdot\vec{\Lambda} \ \nu}{C_o^2} \tag{5}$$

where $\nu$ is the frequency of the electromagnetic radiation or, since

$$\lambda = C_o/\nu \tag{6}$$

where $\lambda$ is the wavelength in vacuum of the electromagnetic radiation, we may write:

$$\phi_s = \frac{8 \pi \vec{A} \cdot \vec{\Lambda}}{C_o \ \lambda} \tag{7}$$

which is the expression usually quoted in the literature,

- 7 -

The phase shift $\phi_{mo}$ appearing in Equation (4) is derived by the classical Faraday effect, a non-reciprocal phenomenon, which produces opposite effects upon radiation in a given state of polarization according to the direction of travel in the propagation medium, in this case the optical fiber 23. In this circumstance the existence of a magnetic field, denoted by the vector $\vec{H}$ along an element of path length $\vec{ds}$ causes the right-hand circular polarization going in, say, the counterclockwise direction to propagate faster than the right-hand circular polarization propagating in the clockwise direction along the fiber. The net phase shift effect over the length of the fiber is given by:

$$\phi_{mo} = 2 \oint_L \vec{VH} \cdot \vec{ds} \qquad (8)$$

where the constant, V, is the Verdet constant of the medium. For fused silica, for example, which many high quality optical fibers have as a core, the value of V is approximately 3.52 radians/(weber/meter) or $4.46 \times 10^{-6}$ radians/ampere for electromagnetic radiation of wavelength 0.6328 micron at a temperature of $30^0$ Celsius. (The value of V depends upon the medium, the wavelength, and the temperature.)

The line integral in Equation (7) may be converted to a surface integral using Stokes' theorem to yield:

$$\phi_{mo} = 2 \int V Curl\ \vec{(H)} \cdot \vec{dA} \qquad (9)$$

where $\vec{dA}$ is the vector element of area swept out by the optical path and the integration is carried out over the entire closed optical path (in one direction) counting each separate turn as separate and adding to the net result.

Maxwell's equations for the electromagnetic field require:

$$Curl\ \vec{(H)} = \frac{\partial \vec{D}}{\partial t} + \vec{i} \qquad (10)$$

where $\vec{i}$ is the vector current density and $\vec{D}$ is the electric displacement. For the slowly varying fields contemplated for $\vec{H}$, the quantity $\partial D / \partial t$ is negligible.

Thus Equation (8) may be put into the form:

$$\phi_{mo} = \int 2 \quad \vec{Vi} \cdot \vec{dA} \tag{11}$$

. If every turn of the output coil carrying the current, $i_o$, passes through every turn of the optical fiber coil, the value of this integral yields the result:

$$\phi_{mo} = 2N_{i_o} N_f Vi_o \tag{12}$$

where $N_f$ is the number of turns in the fiber coil and $N_{i_o}$ is the number of turns in the output coil.

It is an intermediate object of this invention to automatically adjust by feed-back means the output current, $i_o$, to secure the equality of $\phi_s$ and $\phi_{mo}$ and thus obtain the output current given by the equation, as will be explained later:

$$i_o = \frac{4 \, r \, \vec{A} \cdot \vec{\Omega}}{C_o \lambda V N_{i_o} N_f} \tag{13}$$

In implementing this feed-back means, a dither or modulation process is employed which generates the term $\phi_m$ in Equation (2). The second coil 55 is also wrapped toroidally around the fiber-optic coil and contains $N_{i_m}$ turns through which is passed a sinusoidal current, $i_m$, and

$$i_m = I_m \sin\omega_m t \tag{14}$$

derived from a fixed-frequency oscillator (not shown) and amplifier 52. Thus, the same Faraday effect process as described above leads to:

$$\phi_m = 2VN_f N_{i_m} I_m \sin\omega_m t \tag{15}$$

A capacitor 53 is included in series with modulation current $i_m$ to block any direct current which would cause a gyro bias error.

If the current gains through the amplifier 37, for the photo-detector signals $i_{d1}$, $i_{d2}$, and $i_{d3}$ are respectively $k_1$, $-k_2$, and $k_3$, the output current into the demodulator 38 is $i_D$ given by:

$$i_D = k_1 \, i_{d1} - k_2 \, i_{d2} + k_3 \, i_{d3} \tag{16}$$

When $\phi_m$ from Equation (15) is substituted into Equation (2) and this result applied to Equations (1), (3), and (16) we find:

$$i_D = k_1 k_{d1} \, (P_{cc1} + P_{cw1}) - k_2 k_{d2} \, (P_{cc2} + P_{cw2}) + k_3 i_3$$
$$+ 2 \left\{ k_1 k_{d1} \, (P_{cc1} \, P_{cw1})^{\frac{1}{2}} + k_2 k_{d2} \, (P_{cc2} \, P_{cw2})^{\frac{1}{2}} \right\} \left\{ \cos (\phi_s - \phi_{mo}) \cos (k_m \sin \omega_m t) \right.$$
$$\left. + \sin (\phi_s - \phi_{mo}) \sin (k_m \sin \omega_m t) \right\}$$

which, when expanded into harmonics of $\omega_m$, becomes:

$$i_D = k_1 k_{d1} \, (P_{cc1} + P_{cw1}) - k_2 k_{d2} \, (P_{cc2} + P_{cw2}) + k_3 i_3$$
$$+ 2 \left\{ k_1 k_{d1} \, (P_{cc1} \, P_{cw1})^{\frac{1}{2}} + k_2 k_{d2} \, (P_{cc2} \, P_{cw2})^{\frac{1}{2}} \right\} J_0(k_m) \cos (\phi_s - \phi_{mo})$$
$$+ 4 \left\{ k_1 k_{d1} \, (P_{cc1} \, P_{cw1})^{\frac{1}{2}} + k_2 k_{d2} \, (P_{cc2} \, P_{cw2})^{\frac{1}{2}} \right\} \cdot \tag{17}$$

$$\left\{ \cos (\phi_s - \phi_{mo}) \sum_{q=1}^{\infty} J_{2q} (k_m) \cos 2 q \, \omega_m t \right.$$

$$\left. + \sin (\phi_s - \phi_{mo}) \sum_{q=0}^{\infty} J_{(2q+1)} (k_m) \sin (2q + 1) \, \omega_m t \right\}$$

where the modulation index, $k_m$, is given by:

$$k_m = 2 V N_f N_{i_m} I_m \tag{18}$$

and $J_q(k_m)$ denotes the usual Bessel functions of the first kind and integer order, q, of the modulation index familiar to the art of phase and frequency modulation.

This amplified signal, $i_D$, is then synchronously demodulated against the modulation frequency, by the phase-sensitive demodulator 38. The direct current and low frequency signals from the phase sensitive demodulator 38 are applied to an integrator 40 and then are further amplified by the low-pass amplifier 42, to obtain the output current, $i_o$, which closes the feed-back path. If $-k_G$ is the total current gain in the process from the input to PSD to the output of amplifier 42, then the resulting output current, $i_o$, is given by:

$$i_o = -4k_G \left\{ k_1 k_{d1} \left( P_{cc1} P_{cw1} \right)^{\frac{1}{2}} + k_2 k_{d2} \left( P_{cc2} P_{cw2} \right)^{\frac{1}{2}} \right\} J_1(k_m) \sin (\phi_s - \phi_{mo})$$

or since $(\phi_s - \phi_{mo})$ is small

$$i_o = -4k_G \left\{ k_1 k_{d1} \left( P_{cc1} P_{cw1} \right)^{\frac{1}{2}} + k_2 k_{d2} \left( P_{cc2} P_{cw2} \right)^{\frac{1}{2}} \right\} J_1(k_m) (\phi_s - \phi_{mo}) \qquad (19)$$

where the phase angles are measured in radians.

Eliminating $\phi_s$ and $\phi_{mo}$ in this Equation with Equations (7) and (12) one finds:

$$i_o = \frac{4 \pi \vec{A} \cdot \vec{\Omega}}{c_o \lambda V N_i N_f} \quad \frac{\mu}{\mu - 1} \qquad (20)$$

where the feed-back loop gain, $\mu$ , is given by:

$$\mu = 8k_G \left\{ k_1 k_{d1} \left( P_{cc1} P_{cw1} \right)^{\frac{1}{2}} + k_2 k_{d2} \left( P_{cc2} P_{cw2} \right)^{\frac{1}{2}} \right\} J_1(k_m) N_f N_i V \qquad (21)$$

By making $\mu \gg 1$, Equation (13) is secured. The design of the amplifiers must be accomplished to yield a stable feed-back system as practiced in the well developed art of servo-mechanisms and controllers. The precise details are unimportant to the basic concept of this invention except that an integrator must be included in order to get adequate performance of the feed-back system. In any event, the condition $\mu \gg 1$ can only be maintained over a limited band of frequencies. This establishes a frequency bandwidth for the gyro which has implications for the dynamic response of the gyro and for the noise appearing in the gyro output. The dynamic response may be tailored to a specific application by suitable design of the feed-back system, and the output current, $i_o$, is proportional to the component of angular velocity parallel to the net vector area, $\vec{A}$, swept out by the fiber optical path, within this frequency bandwidth.

So called "single mode" optical fibers such as contemplated here are not perfectly ideal. An ideal single mode optical fiber would support two orthogonal states of polarization going in one direction along the fiber with the same phase velocity. It would also support two equivalent orthogonal states of polarization going in the opposite direction with the same phase velocities. A non-ideal single mode fiber in general supports two orthogonal states of polarization propagated in one direction but with slightly different phase velocities. Further, the orthogonal states and phase velocities differ from point to point along the fiber. This near degenerate situation leads to unsatisfactory propagation within the fiber, which is sometimes referred to as polarization noise. A definite state of polarization cannot be maintained over a long length of fiber.

The modulation scheme of this invention partially circumvents this polarization noise difficulty by removing the degeneracy, except near the times at which the modulation current, $i_m$, is near zero. When $i_m$ is not small the fiber supports right and left circular polarized modes of propagation going in the same direction but with significantly different phase velocities due to the Faraday effect. This reduces the polarization noise over most of the modulation cycle. This circumvention may be improved by using a much larger modulation index, $k_m$, and/or by using square-wave modulation rather than sine-wave modulation.

A second method of removing the near degeneracy and thus reducing the polarization noise is to impart to the fiber a torsional twist about its length as it is wound on its supporting coil form. A large amount of such twist has the effect of causing the fiber again to support right and left hand polarization states propagated in the same direction but with significantly different phase velocities. Use of this phenomenon is reported by Rashleigh and Ulrich in Applied Physics Letters, June 1, 1979, in an article entitled "Magneto-Optic Current Sensing with Birefringent Fibers." It is contemplated that such a twisted fiber will be used in the higher accuracy embodiments of this invention.

Returning now to Figure 1, an explanation of the beamsplitter, 13, and the photodetector 15 follows. The laser 11 typically will have some amplitude modulation intrinsic to its output. The radiation falling on the photodetectors 32 and 35 has a portion of power, unmodulated by the frequency $\omega_M$, falling on it which will be modulated by the amplitude modulation of the laser 11. The beamsplitter 13 and photodetector 15 sample a small part of the laser power, and the resulting current is coupled in phase opposition to the outputs of photodetectors 32 and 35 so as to compensate the effect of amplitude modulation of the laser beam, and thus lower the overall noise level with which amplifier 37 must operate. This compensation may not be required in embodiments for reduced accuracy applications.

This invention will work with only one of the photodetectors 32 or 35. If both are used, one can, by varying $k_1$ relative to $k_2$, achieve compensation for certain types of instability in the opto-mechanical system.

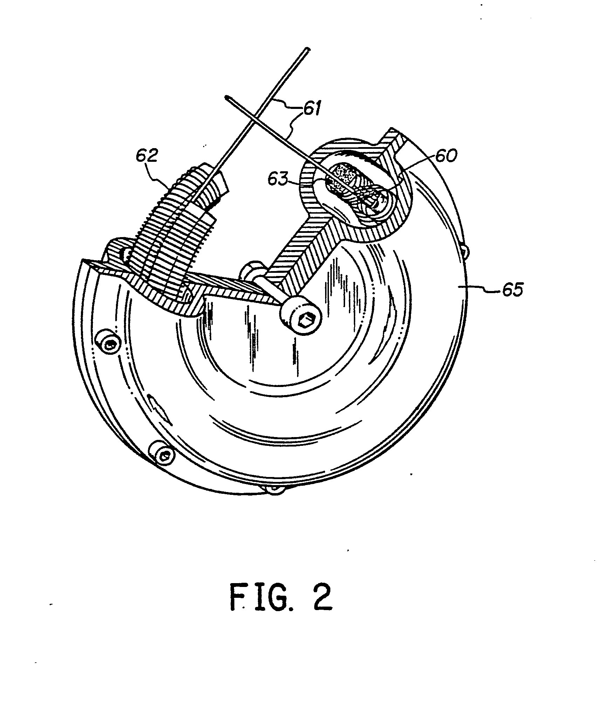

In practice, in order to achieve a satisfactory signal-to-noise ratio in the system, it is desirable to have the modulation index $k_m$, approximately $\pi/2$ in value or in general, approximately $p\,\pi/2$, where p is an odd integer. To achieve even the first of these values requires many more turns, $N_{i_m}$, for the modulation winding than the number of turns $N_{i_o}$, for the output winding. This makes an alternative magnetic structure attractive, which is shown in Figure 2.

In this variant, a coil 60 (the $N_{i_o}$ turn winding) is wound toroidally about the optical fiber 61, but the modulation magnetic field, being of an alternating nature, is produced by transformer action. A second coil 62 ($N_{i_m}$ turn modulation winding) is wound on a suitable ferrite or tape-wound toroidal magnetic-core 63. This core 63 is then encircled along with the fiber-coil 61 by an extremely low resistance one-turn conductor formed by the copper or other low-resistance case 65. The case 65 which must consist of at least two parts can employ gold plating or gold gaskets at the interface between parts to secure low-contact resistance when the parts are bolted or otherwise fastened together. The gold may be replaced by other soft noble metals of high electrical conductivity.

It can be seen that by proper orientation of the quarter-wave-plates 19 and 20 or Figure 1, the mode of propagation within the fiber may be changed from right-hand circular polarization to left-hand circular polarization for both clockwise and counterclockwise beams without deterioration of the performance of this invention.

It can also be seen that the exact sequential order of polarizers, lenses, and beam-splitters is not essential to this invention. The essential quality of the system is that the beams propaged in the fiber be circular polarized of the same hand and that, when split and when recombined, both beams shall be in the same state of polarization.

Although the invention has been described and illustrated with a certain degree of particularity, it is understood that the present disclosure is made by way of example only and that numerous changes in the combination and arrangement of parts may be resorted to by those skilled in the art without departing from the spirit and scope of the invention as hereinafter claimed.

What is claimed is:

1. An interferometer gyroscope, comprising: means for providing a substantially monochromatic, linearly polarized, electromagnetic radiation beam, beam-splitter and recombining means for splitting the electromagnetic radiation beam into first and second beams, means for changing linearly polarized radiation of the split beams of said beam-splitter to circular polarized radiation and to change the circular polarization of beams incident on said recombiner to linear polarization, a coiled optical waveguide in which said first and second circular polarized beams are received and propagated in opposite directions, said first and second beams being directed, after being propagated through said coil, onto said polarization changing means to be converted to linear polarization and then onto said beam splitter and recombining means to be combined into a combined beam indicating a Sagnac phase shift, an electrical coil around the waveguide to generate magnetic fields parallel to the waveguide thereby producing the Faraday effect in the waveguide, and servo means responsive to the Sagnac phase shift indicated by the combined beam to adjust the current in said electrical coil, operative to null the phase shift in the interferometer by balancing the Faraday effect against the Sagnac effect in the waveguide, said current being proportional to an angular velocity of the gyroscope.

2. The interferometer gyroscope of claim 1 in which said means for changing linear polarized radiation to circular polarized radiation and visa versa is a quarter-wave plate.

3. The interferometer gyroscope of claim 1 wherein said waveguide is a dielectric material.

4. The interferometer gyroscope of claim 1 wherein said waveguide is a length of fiber optic material.

5. The interferometer gyroscope of claim 1 further comprising means for generating an electric current proportional to the intensity of the electromagnetic radiation beam, applied to said servo means to minimize the effect of amplitude variations of the electromagnetic radiation beam upon the response of the servo means.

6. The interferometer gyroscope of claim 5 wherein said electric current generating means is a photo detector.

7. The interferometer gyroscope of claim 1 wherein said electrical coil comprises toroidal windings of electrical conductors wrapped around the waveguide.

8. The interferometer gyroscope of claim 4 in which the optical fiber coil has a large torsional twist about its length, whereby polarization noise effects are decreased.

9. An interferometer gyroscope, comprising:
means including an optical waveguide for producing a light beam containing a Sagnac phase shift relatable to the rate of rotation of said optical waveguide
an electrical coil adjacent the waveguide to generate a magnetic field parallel to the waveguide to induce a Faraday effect into the waveguide, and
servo means responsive to the Sagnac phase shift to adjust the current in said electrical coil, operative to null the Sagnac phase shift in the interferometer by balancing the Faraday effect and the Sagnac effect in the waveguide, whereby said current is proportional to the rate of rotation of the waveguide when said Sagnac phase shift is nulled.

10. The interferometer gyroscope of claim 9 in which said optical waveguide is a length of coiled optical fiber.

11. The interferometer gyroscope of claim 9 wherein said electrical coil comprises toroidal windings of electrical conductors wrapped around the waveguide.

12. The interferometer gyroscope of claim 9 further comprising means for generating an electrical current proportional to the intensity of a beam introduced into said waveguide to produce the light containing a Sagnac phase shift, said electrical current being applied to said servo means to minimize the effect of amplitude variations of the introduced light upon the response of the servo means.

FIG. 1

FIG. 2

## DOCUMENTS CONSIDERED TO BE RELEVANT

| Category | Citation of document with indication, where appropriate, of relevant passages | Relevant to claim | CLASSIFICATION OF THE APPLICATION (Int Cl ³) |
|---|---|---|---|
| X | GB-A-2 058 346  (SIEMENS)  *Page  2, line 122 - page 3, line 81* | 1-4,6, 7,9-11 | G 01 C  19/64 |
| A | OPTICS LETTERS, vol. 4, no. 3, March 1979, pages 93-95, New York (USA); R.F.CAHILL et al.: "Phase-nulling fiber-optic laser gyro".  *Page 93, left-hand column, last paragraph* | 5,12 | |
| A | DE-A-2 906 870  (MAX PLANCK GESELLSCHAFT) *Pages 1,2* | 1 | |

TECHNICAL FIELDS
SEARCHED (Int. Cl. ³)

G 01 C  19/64
G 01 P  3/36
H 01 S  3/083

The present search report has been drawn up for all claims

| Place of search THE HAGUE | Date of completion of the search 06-12-1982 | Examiner DE BUYZER H.J. |
|---|---|---|